# EUROPEAN PATENT APPLICATION

(11) **EP 0 556 825 A1**
(43) Date of publication of application: **25.08.1993**
(21) Application number: 93102559.7
(22) Date of filing: 18.02.1993
(51) Int. Cl.: G06F 9/28

(54) **Microprocessor**

(30) Priority: 18.02.1992 JP 29822/92
(71) Applicant: NEC CORPORATION, Tokyo (JP)
(72) Inventor: Kusuda, Masahiro, c/o NEC Corporation, Tokyo (JP)
(74) Representative: Betten & Resch

(57) **Abstract**

The output (202) of a microprogram ROM (102) which stores a vertical type or horizontal/vertical type microprogram is used as a code filed for controlling the operating portion (110) via a microinstruction selector (104), microinstruction register (105) and partial microinstruction selector (106), and an operating result transfer specifying code which forms part of the field is delayed one microinstruction cycle period by a microinstruction delay register (108) to be supplied as a microcode bus to a microinstruction decoder (109). Thus, the pipelined operating portion (110) can be controlled by one step microprogram word thereby to achieve speedization and reduction of the constituted elements.

## Description

### BACKGROUND OF THE INVENTION

The present invention relates to a microprocessor and, more particularly to a microprocessor equipped with a microinstruction control means for controlling a pipelined operating unit.

In a conventional microinstruction control system, a microinstruction latching means for temporarily retaining a microinstruction, which is the output from microinstruction storage means, has comprised only one stage (See, for example, JPA Hei 2-210537, 2-176830, 2-171926, 2-110631 and 1-251157).

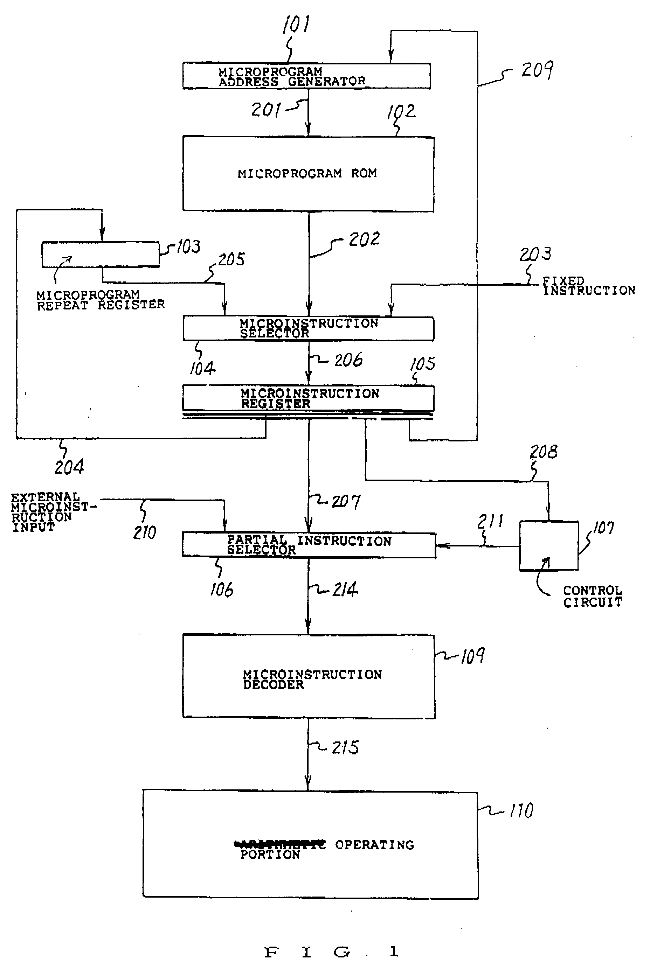

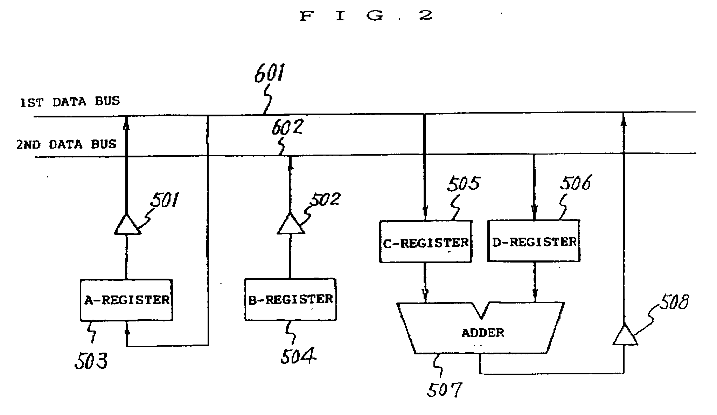

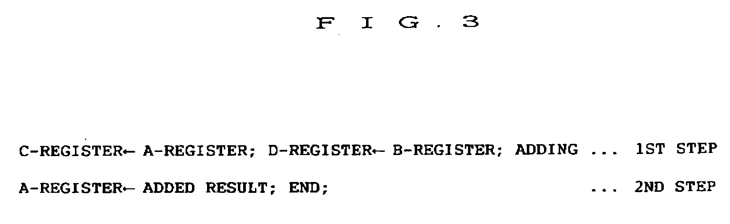

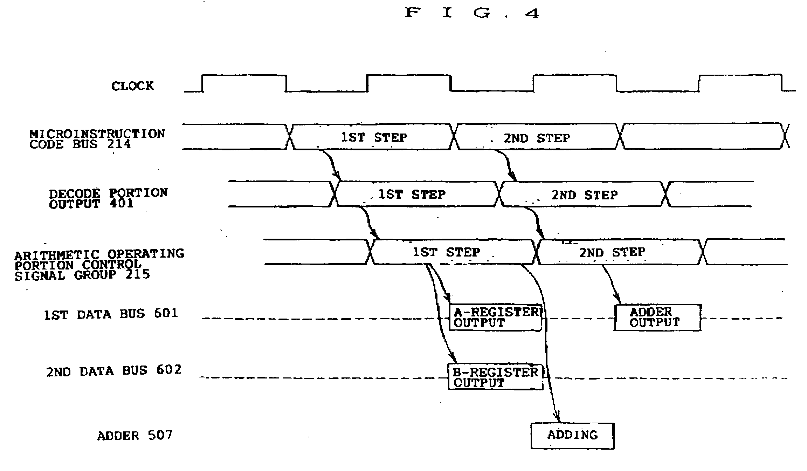

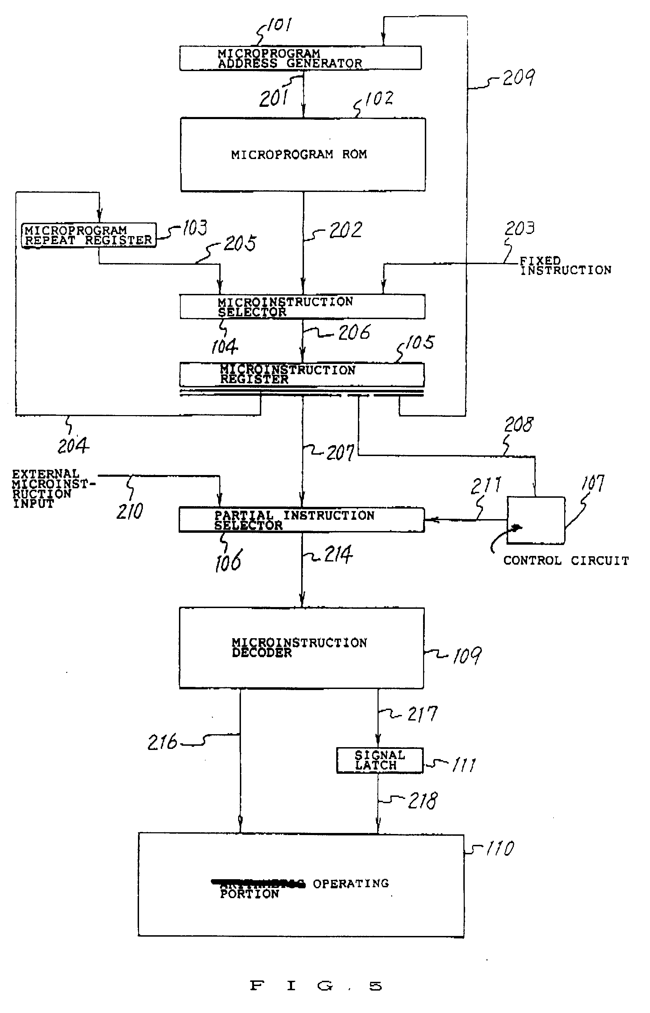

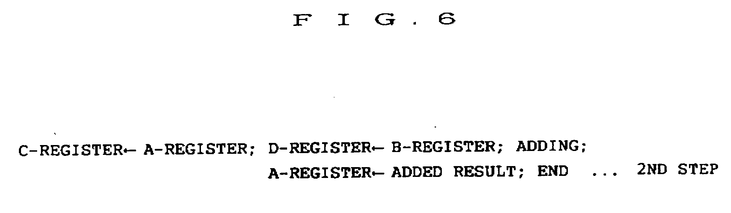

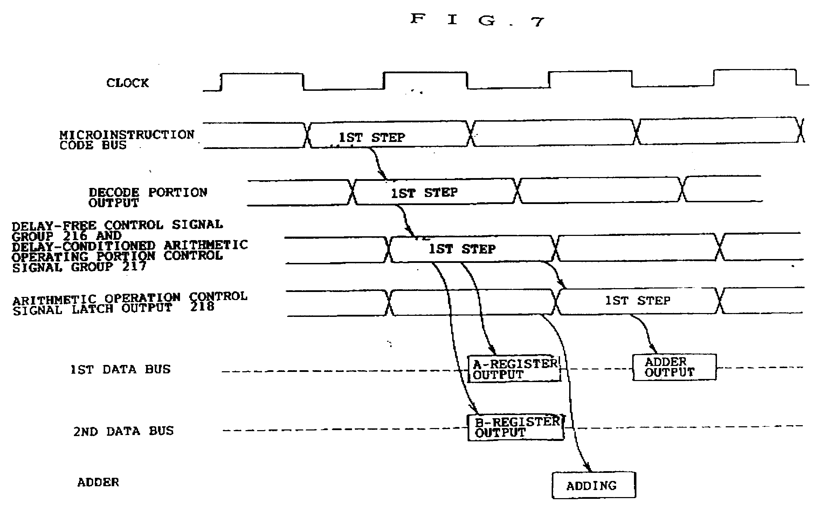

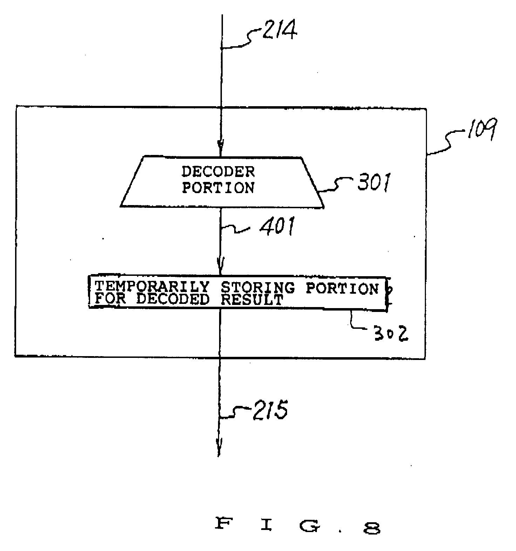

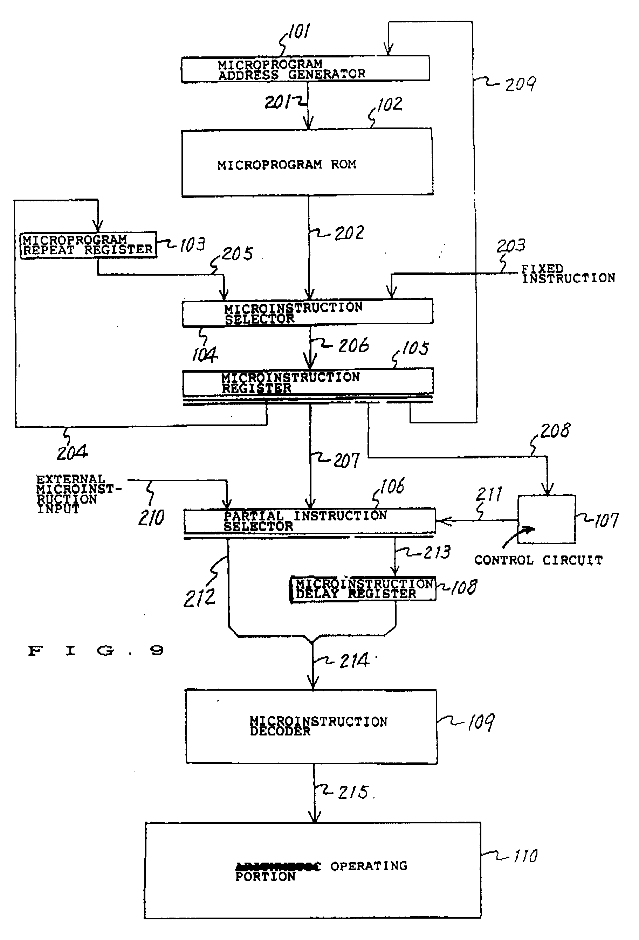

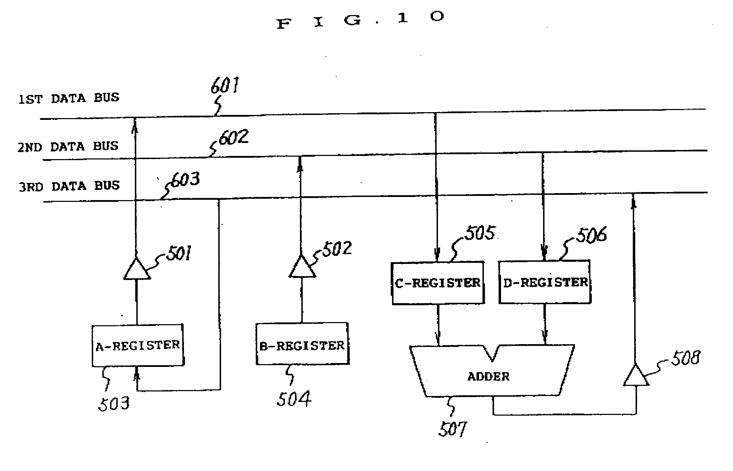

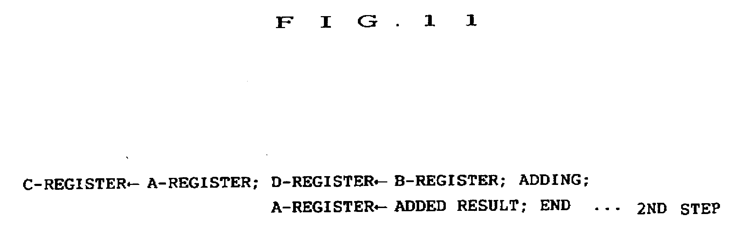

Fig. 1 illustrates a specific example of means for controlling the output of the microinstruction in the conventional microprocessor, in which 101 denotes a microprogram address generator, 102 a microprogram ROM, 103 a microinstruction repeat register, 104 a microinstruction word selector, 105 a microinstruction register, 106 a partial microinstruction selector, 107 a control circuit for the partial microinstruction selector, 109 a microinstruction decoder and 110 an operating portion.

The microprogram ROM 102, with a microprogram address 201 emitted from the microprogram address generator 101 as the address input, emits a microinstruction word corresponding to this address as a microprogram ROM output 202.

The output 202 of the microprogram ROM is entered through the microinstruction word selector 104 to the microinstruction register 105 as the output 206 of the microinstruction word selector 104. All the microinstruction words 204 of the microinstruction register 105 are latched within the microinstruction repeat register 103 in order to repeat their microinstruction words, and the output 205 of the microinstruction repeat register 103 is entered to the microinstruction word selector 104 as the microinstruction together with a fixed instruction 203, which may be a non-operation instruction or the like indicating that nothing is executed.

The microinstruction word selector 104, while executing a non-delayed branch instruction, selects the fixed instruction 203 in order to embed into a delay slot; if the resource accessed by the microinstruction needs a multiplicity of microinstruction cycles, selects the microinstruction repeat register output 205; and selects the microprogram ROM output 202 when the normal microinstruction other than the forgoing is to be executed.

The microinstruction register 105 retains the microinstruction word selector output 206 updated for each microinstruction cycle.

All the microinstruction words 204 can be classified into micro branch address signal 209, micro control signal 208 and microinstruction word signal 207 for controlling the operating portion, which is entered to the partial microinstruction selector 106 for replacing part by the external microinstruction input 210 supplied from the instruction decoder or the like.

The partial microinstruction selector control circuit 107 generates the control signal 211 for the partial microinstruction selector 106, which is the control signal for replacing part of the microinstruction word 207 for controlling the operating portion by the external microinstruction input 210 with the micro control signal 208 taken as its input.

The microinstruction decoder 109, as shown in Fig. 8, often comprises a decoder portion 301 and a portion 302 for temporarily storing the decoded result, which latches the output 401 of the decoder portion, which is the output from the former, so as to substantially eliminate the delay time of the complicated decoded result.

Here, in the portion 302 for temporarily storing the decoded result, the period of time for which the output 401 of the decoder portion 301 is retained for delay account for less than the microinstruction cycle.

A microinstruction code bus 214, which is generated and entered from the partial microinstruction selector 106, is entered to the microinstruction decoder 109 where it is decoded into a group of control signals 215 of the operating portion, which controls the operating portion 110 directly.

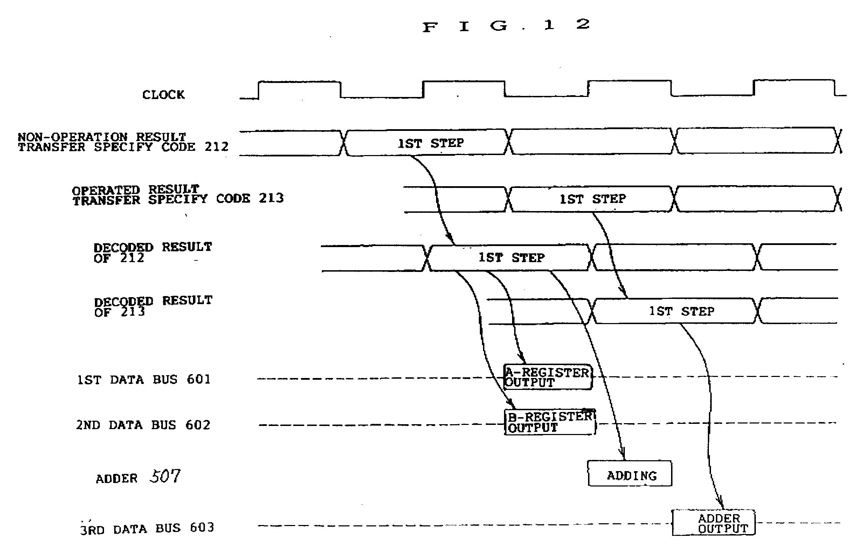

Fig. 2 illustrates an adder as the foregoing operating portion 110, Fig. 3 an example of its microprogram and Fig. 4 a timing of that operation.

Fig. 3 illustrates an example of a microprogram which adds the contents of an A-register 503 and of a B-register 504 respectively according to an adder 507, and writes its added result back to the A-register 503. In the first step, the content of the A-register 503 of Fig. 2 is emitted to a first data bus 601 via an A-register output buffer 501 while at the same time the content of the B-register 504 is emitted to a second data bus 602 via a B-register output buffer 502 to latch each by a C-register 505 and a D-register 506 respectively.

In the microprogram word of the second step of Fig. 3, the added result at the adder 507 is emitted to the first data bus 601 via an adder output buffer 508 to write into the A-register 503.

Fig. 4 illustrates a timing chart of the operation by the foregoing microprogram of the second step.

In the microinstruction code bus 214, the microinstruction code of the first step is decoded by the decoder portion 301 to be turned into the decoder portion output 401, which is delayed for adjusting the timing by the portion 302 for temporarily storing the decoded result by 1/2 clock to be turned into the group of signals 215 for controlling the operating portion, as can be seen in Fig. 8.

Part of the group 215 of signals for controlling the operating portion opens the A-register output buffer 501 to emit the content of the A-register output buffer 503 to the first data bus, and part of it opens the B-register output buffer 502 to emit the content of the B-register 504 to the second data bus 602, and the other part of it is used for instructing to add by the adder 507.

Part of the microinstruction code of the second step 2 becomes the control signal for opening the adder output buffer 508 to emit the added result to the first data bus 601, and another part of it becomes a write strobe into the A-register 503. In this manner, according to the foregoing prior technique, the contents of the A-register 503 and the B-register 504 are added according to the microprogram of the second step.

Further, referring to Fig. 5 illustrating another prior art, the microinstruction control means includes a signal latch 111 for controlling the operating portion which delays a group 217 of delay-conditioned signals for controlling the necessary delay operating portion with one microinstruction cycle as the basic unit, after decoded, to use the latch output 218 of the operating control signal as the operating portion 110 in combination with the delay-free control signal 216, which is the output of the latter.

Fig. 6 illustrates an example of another microprogram having an operating portion similar to that of Fig. 3, which was described referring to the foregoing prior art, including the operating portion control signal latch 111.

Referring to Fig. 6, only in the first step, the A-register 503 and the B-register 504 of Fig. 6 are each emitted to the first data bus 601 and the second data bus 602 to instruct addition to the adder 507 to further write the added result into the A-register 503.

In this microprogram ROM output 202 according to the prior art, the bit number specified to transfer and write the operational result is greater than that of the foregoing microprogram ROM output 202.

Referring to Fig. 7, it is found that, as the operation control signal latch output 218 which instructs to emit the output from the adder, one in which the delay-conditioned operating portion control signal group 217 is delayed for a period of one microinstruction cycle (here, one clock) is used as the operating control signal latch output 218 which instructs the output from the adder.

Since the foregoing conventional microinstruction control comprises only one stage of the main latch means for temporarily latching the microinstruction word, it has been necessary to specify the transfer of the operated result in the next specifying step of transferring operated data and operating on the operated result.

Further, it has been necessary to latch each functional block which needs the microinstruction word, or the decoded result individually as necessary.

Therefore, the former has called for two steps of microinstruction cycles of or the shortest execution cycle of the microinstruction accompanying the operation, thus making it impossible to improve the execution speed of the microinstruction while the latter has caused the absolute number of the latch means for latching the signal of the decoded signal to be vastly increased.

Accordingly, an object of the present invention is to provide a microprocessor which allows such a problem to be solved.

### SUMMARY OF THE INVENTION

According to the present invention, there is provided a novel microprocessor comprising:
a microprogram storage means;
a first latch means for temporarily latching the output signal from the microprogram storage means;
a second latch means for temporarily latching part of the signal emitted from the first latch means;
a plurality of decode means, part of which are provided for decoding the signal emitted from the first latch means and the other part of which are provided for decoding the output signal emitted from the second latch means; and
at least one operating unit controlled by the output signals of the decode means.

In a preferred embodiment of the present invention, the microprocessor may comprise a first signal selector means between the microprogram storage means and the first latch means and a second signal selector means between the first latch means and the second latch means.

### BRIEF DESCRIPTION OF THE DRAWINGS

Fig. 1 is a block diagram of a microprocessor of Fig. 1 according to the prior art;
Fig. 2 is a block diagram of an example of an operating portion of Fig. 1;
Fig. 3 is an example of the microprogram for the microprocessor of Fig. 1;
Fig. 4 is a timing chart of the example of Fig. 1;
Fig. 5 is a block diagram of the microprocessor according to another prior art;
Fig. 6 is a microprogram chart of the microprocessor of Fig. 5;
Fig. 7 is a timing chart of the microprocessor of Fig. 5;
Fig. 8 is an example of a microinstruction decoder;
Fig. 9 is a block diagram of an example of the present invention;
Fig. 10 is a block diagram of the operating portion of Fig. 9;
Fig. 11 is an example of the microprogram chart of the microprocessor of Fig. 9; and
Fig. 12 is a timing chart of the microprocessor of Fig. 9.

### DETAILED DESCRIPTION OF THE PREFERRED EMBODIMENTS

Referring to Fig. 9 illustrating a block diagram of a microprocessor embodying the present invention, wherein reference numeral 101 denotes a microprogram address generator, 102 a microprogram ROM, 103 a microinstruction repeat register, 104 a microinstruction selector, 105 a microinstruction register, 106 a partial microinstruction decoder and 110 an operating portion. These elements are substantially the same as those of the conventional microprocessor illustrated in Fig. 1, and operate similarly. Therefore, in order to avoid the repeated description, the detailed description is omitted here.

The microprocessor of the present invention differs from the conventional one as already described with reference to Fig. 1, in that there is provided a microinstruction delay register 108 for delaying only a coding portion for specifying the transfer of the operating result by one microinstruction cycle is provided to bundle with a code for specifying the transfer of the non-operated result to form a microinstruction code bus 214.

Fig. 10 illustrates an example in which the operating portion of the microprocessor of the present invention as shown in Fig. 9 constitutes an adder. An example of the adding microprogram of this operating portion is shown in Fig. 11, and its timing chart is shown in Fig. 12.

Referring to Fig. 10, for the output of the adder 507, a path for writing the output to the A-register 503 is added to the conventional one, as shown, via the adder output buffer 508 and the third data bus 603.

Fig. 11 illustrates a microprogram which is similar to the microprogram shown in Fig. 3.

Referring now to Fig. 12, the non-operating result transfer specifying code 212 controls the first data bus 601, second data bus 602 or the like at a timing shown by the decoded result of 212 via the microinstruction decoder 109.

In the microprocessor according to the present invention, a field (non-operating result transfer specifying code 212) for controlling the foregoing first and second data buses and a group of registers directly connected to them and a field (operating result transfer code 213) for controlling the third data bus and register and output buffer directly connected to it are separated from each other, and the latter operating result transfer code 213 portion is delayed by one microinstruction cycle each being supplied to the microinstruction decoder 109. Thus, a single microinstruction word of the microprogram ROM 102 can be pipelined to supply to each control means so that it can be represented and specified by a single microinstruction memory word. In consequence, the execution speed of the microinstruction is improved.

Furthermore, the microinstruction words prior to being decoded by the microinstruction decoder 109 can be made smaller in the number of signal lines than the group of the operating portion control signals after decoded, and the number of the register circuits can also be made smaller. If the microprocessor according to the present invention is implemented on the semiconductor board, then since the delay means is provided before the signal is supplied to the microinstruction decoder 109, it also becomes possible to dispose the microprocessor with part of its output portion made smaller.

## Claims

1. A microprocessor comprising:
a microprogram storage means (102);
a first latch means (105) for temporarily latching the output signal from the microprogram storage means;
a second latch means (108) for temporarily latching part of the signal emitted from the first latch means;
a plurality of decode means (109), part of which are provided for decoding the signal emitted from the first latch means and the other part of which are provided for decoding the output signal emitted from the second latch means; and
at least one operating unit (110) controlled by the output signals of the decode means.

2. The microprocessor according to claim 1 which further comprises a signal selecting means (104) provided between the microprogram storage means (102) and the first latch means (105) and second signal selector means (106) provided between the first latch means (105) and the second latch means (108).
